# EUROPÄISCHE PATENTSCHRIFT

(11) **EP 2 361 275 B1**
(45) Veröffentlichungstag und Bekanntmachung des Hinweises auf die Patenterteilung: **26.04.2017**
(21) Anmeldenummer: 09795996.9
(22) Anmeldetag: 21.12.2009
(51) Int. Cl.: C08G 77/60, C08L 83/16, C04B 35/571, D01F 9/10

(54) **POLYSILAN-POLYCARBOSILANE MIT REDUZIERTEM CHLORGEHALT AUF BASIS VON METHYLCHLORPOLYSILANEN SOWIE DARAUS HERGESTELLTE SPINNMASSEN UND KERAMISCHE FORMKÖRPER**
POLYSILANE-POLYCARBOSILANES WITH REDUCED CHLORINE CONTENT BASED ON METHYLCHLOROPOLYSILANES, AND SPINNING DOPES AND CERAMIC MOLDINGS PRODUCED THEREFROM
POLYSILANE-POLYCARBOSILANE À TENEUR EN CHLORE RÉDUITE À BASE DE MÉTHYLCHLOROPOLYSILANES, ET MATIÈRES À FILER ET CORPS MOULÉS EN CÉRAMIQUE FABRIQUÉS EN CES COMPOSÉS

(30) Priorität: 22.12.2008 DE 102008064372
(43) Veröffentlichungstag der Anmeldung: 31.08.2011
(73) Patentinhaber: Fraunhofer-Gesellschaft zur Förderung der angewandten Forschung e.V., 80686 München (DE)
(72) Erfinder: RUEDINGER, Arne, 97228 Rottendorf (DE); CLADE, Juergen, 97084 Wuerzburg (DE); SPANIOL, Heiko, 36419 Geisa (DE); SPORN, Dieter, 97082 Würzburg (DE)
(74) Vertreter: Strehl Schübel-Hopf & Partner
(86) Internationale Anmeldenummer: PCT/EP2009/067703
(87) Internationale Veröffentlichungsnummer: WO 2010/072739

(56) Entgegenhaltungen:
- EP-A2- 0 315 953
- WO-A1-2005/108470
- US-A- 4 314 956
- US-A1- 2004 030 083

## Beschreibung

Die vorliegende Erfindung betrifft Polysilan-Polycarbosilan-Copolymere, die ausgehend von chlorhaltigen Silanen durch gezielte thermische Behandlung hergestellt und schwer- bzw. unschmelzbar gemacht werden. Die erfindungsgemäßen Copolymere zeichnen sich durch einen deutlich verringerten Chlorgehalt aus. Die Erfindung betrifft auch Verfahren zum Herstellen von Grünfasern und von Keramikfasern unter Verwendung von Lösungen bzw. Spinnmassen aus diesen Polysilan-Polycarbosilanen sowie Verfahren zum Aufbau keramischer Matrices. Außerdem betrifft sie Grünfasern und keramische Formkörper, insbesondere Fasern, die aus den Polysilan-Polycarbosilanen erzeugt werden können.

Siliciumcarbid-Werkstoffe sind für ihre mechanischen Festigkeiten bei hohen Temperaturen sowie ihre gute Oxidationsbeständigkeit bekannt. Daher kommen sie für eine Vielzahl von Verwendungszwecken in Frage, vor allem in Form von Fasern als Verstärkungselemente in Bauteilen, die hohen Temperaturen und/oder korrosiven Medien ausgesetzt sind.

Polysilane wurden erstmals von Kipping via Wurtz-Kupplung von Diphenyldichlorsilan mit Natrium dargestellt. Von Yajima et al. wurde Dodekamethylcyclohexasilan erstmals als Ausgangsmaterial zur Herstellung von SiC-Keramikfasern verwendet. Zu diesem Zweck muss die Verbindung in einem Autoklaven unter Anwendung erhöhter Temperatur und Überdruck vernetzt werden, wobei eine Umwandlung in Polycarbosilane stattfindet (Kumada-Umlagerung). Nach Extraktion niedermolekularer Bestandteile wird ein unschmelzbares, hochmolekulares Polycarbosilan-Pulver gewonnen. Lösungen dieses Pulvers in Benzol oder Xylol können nach dem Trockenspinnprozess zu Grünfasern verarbeitet werden, die sich ohne vorhergehende Härtung zu SiC-Keramikfasern pyrolysieren lassen. Der wesentliche Nachteil dieses Verfahrens ist die aufwändige Synthese des Ausgangspolymers, die die Verwendung von Alkalimetallen, Reaktionen im Autoklaven und einen umständlichen Extraktionsprozess einschließt.

In einer Variante dieses Verfahrens wird auf die Anwendung hoher Drücke bei der Vernetzung und Umwandlung in Polycarbosilan verzichtet, was zu einem schmelzbaren Material führt. Dieses lässt sich nach dem Schmelzspinnverfahren zu Grünfasern verarbeiten, die dann jedoch vor der Pyrolyse durch Auslagerung an Luft bei erhöhter Temperatur gehärtet werden müssen. Die resultierenden Keramikfasern enthalten daher mehrere Masse-% Sauerstoff, was ihre Hochtemperaturstabilität erheblich beeinträchtigt. Beide Verfahrensvarianten wurden patentiert, siehe US 4,100,233.

Weiterhin bekannt sind die Synthese eines Phenylmethylpolysilans durch Wurtz-Kupplung einer Mischung von Phenylmethyl- und Dimethyldichlorsilan und die Synthese verzweigter Polysilane durch Wurtz-Kupplung von R₂SiCl₂/RSiCl₃-Gemischen (R = Methyl, Ethyl oder Phenyl). Das Spinnverhalten (Schmelzspinnverfahren) der erhaltenen Polymere wurde untersucht. Zahlreiche andere Methoden zur Synthese von Polycarbosilanen wurden vorgeschlagen. Viele dieser Methoden sind in WO 2005/108470 aufgelistet.

Die Disproportionierung von Disilanen mit Lewis-Basen zu Mono- und Polysilanen wurde 1953 von Wilkins entdeckt. Die entsprechende Reaktion mit Methylchlordisilan-Gemischen aus der Müller-Rochow-Synthese wurde von Bluestein sowie von Cooper und Gilbert beschrieben. Roewer et al. untersuchten die Disproportionierung der Methylchlordisilane Cl₂MeSiSiMeCl₂, Cl₂MeSiSiMe₂Cl und ClMe₂SiSiMe₂Cl sowohl unter homogener als auch unter heterogener Katalyse. Im ersteren Fall wurden stickstoffhaltige Heterocyclen, vor allem N-Methylimidazol, im letzteren stickstoffhaltige Heterocyclen oder Bis(dimethylamino)phosphorylgruppen eingesetzt, die an die Oberfläche eines Silicat-Trägers gebunden waren. Mehrere Oligosilane konnten im Produktgemisch identifiziert werden. In EP 0 610 809 A1 wird eine thermische Nachbehandlung der Polysilane zu deren Umwandlung in Polycarbosilane offenbart; allerdings ist dieses glasartige Produkt zumindest bei relativ milder thermischer Behandlung (bis 220°C) wieder aufschmelzbar.

Auch die Herstellung von Siliciumcarbid-Fasern aus den so erhaltenen Polysilanen wurde beschrieben, z. B. in EP 668 254 B1. Da die Polysilane jedoch schmelzbar sind, müssen die Grünfasern vor der Pyrolyse mit Ammoniak bei erhöhter Temperatur gehärtet werden.

Zur Formstabilisierung von aus Polycarbosilanen durch Schmelzspinnen gewonnenen Grünfasern ist in der Regel eine Härtung (curing) notwendig, um das Material vor der Pyrolyse unschmelzbar zu machen. In der Regel erfolgt diese Härtung durch Behandlung mit Reaktivgas. Die ursprünglich praktizierte Härtung mit Luft bei erhöhter Temperatur hat den Nachteil eines erhöhten Sauerstoffeintrags in die Faser, was deren Hochtemperaturstabilität stark beeinträchtigt (Faserschädigung durch Ausgasen von CO und/oder SiO bei hohen Temperaturen (T. Shimoo et al., J. Ceram. Soc. Jap., Int. Ed. 102 (1994) 952). Man hat daher auch versucht, den Sauerstoffeintrag während der Grünfaserhärtung zu verringern. Lipowitz (US 5,051,215) beschreibt die Grünfaserhärtung mit NO₂ anstelle von Luft; hierbei wird die Sauerstoffaufnahme von ca. 10-15 Masse-% (Lufthärtung) auf < 7 Masse-% verringert. Allerdings ist ein Mindest-Sauerstoffgehalt von 5-6 Masse-% erforderlich, um Verklebungen im Faserbündel zu vermeiden. Die ebenfalls vorgeschlagene Härtung durch Bestrahlung mit hochenergetischen Elektronen wiederum dürfte mit einem ungewollten Sauerstoffeintrag verbunden sein, der die Härtung letztendlich bewirkt.

Nachteilig an den älteren Verfahren ist also, dass die Fasern aus schmelzbaren Ausgangsmaterialien, wie oben erläutert, durch Auslagerung an der Luft oder mit Hilfe von Ammoniak bei erhöhten Temperaturen vorgehärtet werden müssen, was zu erhöhten, unerwünschten Sauerstoffgehalten und anderen Nachteilen führt. Fasern aus unschmelzbaren, hochmolekularen Polycarbosilan-Pulvern dagegen können zwar aus Lösungen dieser Pulver in Benzol oder Xylol nach dem Trockenspinnprozess zu Grünfasern verarbeitet werden, die sich ohne vorhergehende Härtung zu SiC-Keramikfasern pyrolysieren lassen; der Weg zu derart unschmelzbaren Pulvern ist jedoch kostenintensiv und umständlich.

Um dieses Problem zu beseitigen und zu einem einfach handhabbaren Verfahren zu kommen, wird in der WO 2005/108470 ein Verfahren für die Herstellung einer Polysilan-Polycarbosilan-Copolymerlösung offenbart, aus der sich sauerstoffarme keramische Formkörper mit einer Zusammensetzung nahe SiC erzeugen lassen. Das Ausgangsmaterial für diese Lösung ist kostengünstig und auf einfache Weise zugänglich und lässt sich sehr einfach in ein unschmelzbares, für das Trockenspinnen geeignetes Material umwandeln, das nach der Formgebung ohne weitere Behandlung in das entsprechende keramische Material überführt werden kann.

Bei dem genannten Ausgangsmaterial handelt es sich um Polysilane, die durch Disproportionierung von Methylchlordisilan-Gemischen, wie sie als hochsiedende Fraktion bei der Direktsynthese von Methylchlorsilanen (Müller-Rochow-Prozess (US 2,380,995 (1941); R. Müller, Wiss. Z. Techn. Univ. Dresden 12 (1963) 1633) anfallen, mit Lewis-Base-Katalysatoren erhältlich sind. Diese können mit Hilfe einer nachfolgenden, gezielten thermischen Behandlung in bequemer Weise so modifiziert werden, dass sie zwar schwer- bzw. unschmelzbar, aber in indifferenten Lösemitteln noch so weitgehend löslich sind, dass sie in einem Formgebungsprozess weiter verarbeitet werden können. Lösungen dieser im folgenden als "Polysilan-Polycarbosilan-Copolymere" bezeichneten Materialien lassen sich z.B. zur Herstellung von Fasern nach dem Trockenspinnverfahren oder zum Aufbau keramischer Matrices nach dem Flüssigphasen-Infiltrationsverfahren verwenden. Polymerfasern, die aus diesen Lösungen erhältlich sind, lassen sich ohne weitere formstabilisierende Behandlung im Bündel verklebungsfrei zu sauerstoffarmen SiC-Keramikfasern pyrolysieren.

Nachteilig an diesen Fasern ist jedoch, dass sie immer noch einen relativ hohen Chlorgehalt (zwischen 8 und 12 Masse-%) aufweisen, was eine gewisse Korrosionsanfälligkeit bewirkt. Keramische SiC-Fasern, welche aus Copolymer-Lösungen wie den voranstehend genannten hergestellt werden, verlieren diesen Chlorgehalt bis zu einer maximalen Temperaturbehandlung von etwa 1200°C nicht. Erst durch höhere Temperaturen (ca. 1800°C) lässt sich der Chlorgehalt auf unter 1 Masse-% reduzieren. Hierdurch wird die Faser jedoch extrem geschädigt, so dass die mechanischen Eigenschaften wie die maximale Zugspannung und der E-Modul stark sinken. Auch ein Austrag/Austausch des Chlors in der keramischen Faser mittels Reaktivgasen wie Wasserstoff, Formiergas, Ammoniak etc. führt zu einer Reduzierung der mechanischen Festigkeiten der resultierenden keramischen Fasern.

Die Disproportionierung von Disilanen mit Lewis-Basen zu Mono- und Polysilanen wurde bereits voranstehend erwähnt, desgleichen die entsprechende Reaktion mit Methylchlordisilan-Gemischen aus der Müller-Rochow-Synthese. Eine nähere Untersuchung des bei der Disproportionierung mit Tetrabutylphosphoniumchlorid entstehenden Rückstandes erfolgte durch Baney et. al., siehe Organometallics 2 (1983) 859. Dabei entstehen reine Polysilane, jedoch keine Polysilan-Polycarbosilan-Copolymere. Es ist davon auszugehen, dass der Disproportionierungskatalysator zumindest teilweise in das Produkt eingebaut wird, so dass die Polysilane sowie daraus entstehende Nachfolgeprodukte Phosphor enthalten. Dies ist nachteilig hinsichtlich der Oxidationsstabilität daraus hergestellter Keramiken, denn Phosphor hat eine hohe Affinität zu Sauerstoff. Auch bildet Phosphor - im Gegensatz zu Silizium - kein Carbid.

Von Baney et al. wurde auch die Herstellung von weitestgehend Cl-freiem Methylpolysilan bzw. Methylhydridopolysilan durch Umsetzung dieses Rückstandes mit Grignard-Verbindungen bzw. LiAlH₄ beschrieben. (US 4,298,559; US 4,310,482). Eine Chlorreduzierung durch eine Alkylierung mit Grignard-Reagenzien ist allerdings sehr kostspielig. Außerdem müssen Grünfasern, die aus einem solchen durch Grignard-Reaktion permethylierten Polysilan hergestellt wurden, gehärtet werden (J. Lipowitz et al., Ceram. Engng. Sci. Proc. 9 [7-8] (1988) 931; allerdings werden hierzu keine näheren Angaben gemacht). Eine Chlorsubstitution durch Methoxygruppen gemäß der von E. Hengge, N. Holtschmidt, Monatsh. Chem. 99 (1968) 340 vorgeschlagenen Umsetzung mit Methanol/Pyridin oder mit Orthoameisensäuremethylester, vgl.
T. Lange, Dissertation, TU Freiberg 2006, ist zwar denkbar, wäre aber mit dem unerwünschten Einbau von Sauerstoff in Polymer und Keramik verbunden.

Baney et al. schlagen eine Chlor-Reduktion der durch Katalyse mit Butylphosphoniumchlorid erhaltenen Polysilane durch Substitution der Halogenide mit -NHR-Gruppen vor. Als Substitutionsmittel werden verschiedene Amine genannt. Jedoch können praktisch nur primäre Amine oder Ammoniak für diese Substitutionen verwendet werden. Mit sekundären Aminen lassen sich Produkte mit -NHR-Endgruppen nämlich nicht erhalten, weil die Substitution von an Si gebundenem Cl immer über eine NH-Funktion erfolgen muss. Dementsprechend zeigen alle Beispiele eine Substitution mit primären Aminen. Laut Beispielen konnte mit Anilin ein Produkt erhalten werden, dessen Chlorgehalt von anfänglich 19.8 Gew.-% auf 8.9 Gew.-% gesenkt war, während mit Alkylaminen teilweise ein pyrophores Material, teilweise eine gummiartige, gelbe Flüssigkeit mit einem Chlorgehalt von nur 1.6 Gew.-% erhalten wurde, siehe
Baney et al. in Organometallics, a.a.O., und US 4,314,956. Da Disilane farblos sind und mit zunehmender Polymerisation eine Farbvertiefung zu dunkelbraun eintritt, lässt sich aus der Farbe auf einen relativ geringen Vernetzungsgrad schließen.

Eine Reduktion des Chlorgehalts verschiedener Silazane ist ebenfalls aus dem Stand der Technik bekannt. So wird in DE 38 84 753 T2 vorgeschlagen, den Chlorgehalt von Methylpolydisilylazanpolymeren der Formel (Me₃SiNH)_{6-x-2y}MeₓSi₂(NH)_{y} von 3-5 Gew.-% auf unter 0,5 Gew.-% zu senken, indem diese Polymere in einem organischen Lösungsmittel unter Druck mit Ammoniak behandelt werden. Die dabei entstehenden Polymere sind allerdings schmelzbar; des Weiteren enthalten sie hohe Anteile an Stickstoff. Gemäß DE 05 36 20 635 lässt sich der Chlorgehalt aller Polysilan- und/oder Polycarbosilan-Polymere, die direkt an Siliciumatome gebundenes Halogen enthalten, dadurch verringern, dass diese Polymere mit Hexamethyldisilazan in Kontakt gebracht werden. In den Beispielen werden nur wenige konkrete Ausgangsmaterialien angegeben; die erhaltenen Produkte sind teilweise schmelzbar und teilweise unlöslich; ihr Chlorgehalt ist immer noch sehr hoch. In DE 37 43 423 C2 wird vorgeschlagen, die reaktionsfähigen Chlor- oder Bromatome von Alkylpolysilanen mit Aminolyse-Reagenzien wie Ammoniak, Aminen oder Anilin zu abstrahieren und durch organische Reste zu ersetzen. Die gemäß den Beispielen erhaltenen Produkte weisen einen sehr geringen Chlorgehalt auf; sie sind jedoch zumindest in den meisten Fällen schmelzbar und teilweise in indifferenten Lösemitteln unlöslich; außerdem enthalten sie in vielen Fällen relativ hohe Sauerstoffanteile.

Aufgabe der vorliegenden Erfindung ist es, ein zuverlässiges Verfahren zur Herstellung von sauerstoffarmen bzw. sauerstofffreien, löslichen, unschmelzbaren polysilanhaltigen Polymeren mit einem sehr geringen Chlorgehalt (meist unter 1 Gew.-%, vorzugsweise unter 0,5 Gew.-%) bereitzustellen, die schwer- oder unschmelzbar sind, sich in indifferenten Lösemitteln jedoch lösen lassen. Außerdem umfasst die Aufgabe der vorliegenden Erfindung die Bereitstellung von Verfahren zur Herstellung von Grün- und Keramikfasern aus den so erhaltenen polysilanhaltigen Polymeren sowie die Bereitstellung der daraus hergestellten Grün- und Keramikfasern.

Diese Aufgabe soll dabei erfindungsgemäß gelöst werden, ohne auf das Ausgangsmaterial, das in der WO 2005/108470 vorgeschlagen wird, verzichten zu müssen, da es kostengünstig und leicht erhältlich ist.

Erfindungsgemäß wird vorgeschlagen, zwar weiterhin chlorhaltige Silane als Ausgangsmaterialien zu nutzen und diese in einem Zwischenschritt in ein Kohlenwasserstoffgruppen tragendes/enthaltendes Roh-Polysilan/Oligosilan zu überführen und daraus Polysilan-Polycarbosilan-Copolymere zu synthetisieren, den Chlorgehalt der Polysilan-Polycarbosilane jedoch dadurch zu senken, dass das Roh-Polysilan/Oligosilan mit einem Substitutionsmittel umgesetzt wird, durch welches Chlor durch einen stickstoffhaltigen, chlorfreien Substituenten ersetzt wird.

Als Ausgangsmaterial für die Polymerherstellung werden die gleichen, Chlor und Kohlenwasserstoffgruppen enthaltenden Silane/Oligosilane eingesetzt, die auch in WO 2005/108470 A1 als Ausgangsmaterialien angegeben sind. Es handelt sich dabei um Gemische aus Methylchlordisilanen mit der Zusammensetzung Si₂MeₙCl₆₋ₙ (n = 1-4), und bevorzugt solche, die als hochsiedende Fraktion (Kp. 150-155 °C) bei der "Direktsynthese" nach Rochow und Müller anfallen. Letztere bestehen in der Regel aus einem Gemisch aus 1,1,2,2-Tetrachlor-dimethyldisilan und 1,1,2-Trichlor-trimethyldisilan mit weniger als 10 mol-% anderen Bestandteilen. Die beiden genannten Disilane werden vorzugsweise in einem Molverhältnis zwischen 0,5 zu 1 bis 1,5 zu 1 vorgelegt.

Die genannten Disilan-Gemische werden in einem ersten Schritt in Anlehnung an z.B. EP 610809 oder U. Herzog et al., Organomet. Chem. 507 (1996) 221 unter homogener Katalyse mit einer stickstoffhaltigen Lewis-Base und vorzugsweise bei erhöhter Temperatur disproportioniert, wobei die während der Reaktion als Spaltprodukte anfallenden Monosilan-Gemische kontinuierlich abdestilliert werden. Die Reaktionstemperatur beträgt vorzugsweise 150-300 °C, stärker bevorzugt 200-250 °C. Als Katalysator wird eine organische Stickstoffverbindung mit Lewis-Basizität, jedoch ohne N-H-Funktion, eingesetzt. Bevorzugte Katalysatoren sind stickstoffhaltige Heterocyclen wie Pyridin, Chinolin, N-Methylpiperidin, N-Methylpyrrolidin, N-Methylindol oder N-Methylimidazol. Die Menge an eingesetztem Katalysator beträgt bevorzugt 1 bis 2 Masse-%. Die Disproportionierung findet im Übrigen unter den in der Literatur bekannten Bedingungen statt; insbesondere ist es günstig, Feuchtigkeit und Sauerstoff durch die Verwendung von Inertgas wie Stickstoffreinstgas von den Materialien fernzuhalten, da das Produkt (nachstehend als "Roh-Polysilan/Oligosilan" bezeichnet) sauerstoffempfindlich ist.

Als besonders vorteilhaft für die Herstellung des Roh-Polysilans/Oligosilans erweist sich der Zusatz eines Vernetzungs-Hilfsmittels. Dieses Vernetzungs-Hilfsmittel kann ein Arylhalogensilan, ein Arylhalogenboran oder ein Gemisch dieser Verbindungen sein. Bevorzugt werden als Vernetzungs-Hilfsmittel Phenyltrichlorsilan, Diphenyldichlorsilan und Phenyldichlorboran eingesetzt, besonders bevorzugt Phenyltrichlorsilan. Die Menge an eingesetztem Vernetzungs-Hilfsmittel beträgt bevorzugt 5 bis 20 Masse-%, stärker bevorzugt 10 bis 15 Masse-%.

Das so hergestellte Rohpolysilan/Oligosilan ist dunkelbraun und daher als höher vernetzt anzusehen als das von Baney et al., a.a.O. durch Disproportionierung mit Butylphosphoniumchlorid erhaltene Polysilan. Dies ist im Hinblick auf die spätere, weitergehende thermische Vernetzung günstig, denn diese ist umso unaufwendiger, je höher der Vernetzungsgrad des Ausgangspolysilans ist.

Erfindungsgemäß wird das Roh-Polysilan/Oligosilan bzw. das vergleichbare Produkt aus chlor- und kohlenstoffhaltigen Silanen weiterhin einer Chlorsubstitution unterworfen. Dabei wird diese Chlorsubstitution am Produkt der Disproportionierung oder vergleichbaren Umsetzung zu einem Roh-Polysilan/Oligosilan, d. h. am dabei erhaltenen Roh-Polysilan/Oligosilan durchgeführt. Die erfindungsgemäße Reihenfolge der durchzuführenden Schritte beruht auf folgenden Erkenntnissen der Erfinder: Bei der Disproportionierung wird bereits ein Großteil des im Disilan-Gemisch gebundenen Chlors in Form von Spaltprodukten ausgetragen; die Spaltprodukte können als Wertstoff in die Prozesskette der Siliconherstellung zurückgeführt werden. Versucht man, das Chlor bereits in dieser Stufe noch weiter zu senken und die Substitution bereits mit der Disilan-Fraktion durchzuführen, ist sehr viel mehr Amin einzusetzen. Dementsprechend fällt mehr Salz als Abfallprodukt an, und die bei der Disproportionierung und Vernetzung anfallenden Spaltprodukte lassen sich nicht mehr anderweitig weiterverwenden. Gleichzeitig bleibt die Menge an zusätzlich entferntem Chlor unbefriedigend. Auch stellen sich weitere Probleme bei der Disproportionierung ein, die die Ausbeute am gewünschten Produkt weiter senken. Wird statt dessen das bereits nachvernetzte Polysilan-Polycarbosilan-Copolymer der Dechlorierung unterzogen, erhält man ein zwar chlorarmes Produkt; dieses ist jedoch nicht mehr unschmelzbar und kann damit nicht nach dem Trockenspinnverfahren versponnen werden. Erst mit dem Auffinden der erfindungsgemäßen Lösung konnte überraschenderweise festgestellt werden, dass es entscheidend ist, die Dechlorierung zwar einerseits zu einem frühen Zeitpunkt durchzuführen, um die Unschmelzbarkeit des Materials zu erhalten, andererseits diesen Zeitpunkt jedoch nicht an den Anfang der Reaktionskette zu legen, weil sich sonst gar keine Produkte erhalten lassen, die sich bis zur Unschmelzbarkeit vernetzen lassen.

Die Chlorreduzierung durch Substitution von Chloratomen erfolgt vorzugsweise mit Hilfe von Amin- und/oder Silylaminverbindungen, d.h. Verbindungen, die mindestens eine N-Si-Gruppierung oder, stärker bevorzugt, mindestens eine N-H-Gruppierung aufweisen. In einer ersten Ausgestaltung der Erfindung sind sie vorzugsweise ausgewählt unter Ammoniak und primären oder sekundären Aminen. Geeignet sind insbesondere Amine der Formel HNR¹R², worin R¹ und R² unabhängig voneinander Wasserstoff, ggf. mit weiteren Aminogruppen substituiertes Alkyl, Alkenyl, Aryl, Arylalkyl, Alkylaryl, Arylalkenyl, Alkenylaryl oder (R³)₃Si-[NR³-Si(R³)₂]ₘ mit m = 0 bis 6 sind, oder worin R¹ und R² zusammen einen Alkylenrest mit 4 oder 5 Kohlenstoffatomen
oder -Si(R³)₂-[NR³-Si(R³)₂]ₙ- mit n = 1 bis 6 darstellen. In einer zweiten Ausführungsform werden Silylamine, insbesondere Silazane der Formel Si(R³)₃-[NR³- Si(R³)₂]ₙ-R³ eingesetzt, worin n eine ganze Zahl von 1-6 sein kann. Jeder Rest R³ ist in allen Fällen gleich oder verschieden und bedeutet Wasserstoff, Alkyl oder Aryl. In einer dritten, bevorzugten Ausgestaltung handelt es sich bei den Verbindungen um sekundäre, cyclische Amine, insbesondere ausgewählt unter Pyrrol, Indol, Carbazol, Pyrazol, Piperidin und Imidazol. In einer vierten Ausführungsform erfolgt die Substitution mit einer Verbindung der Formel N(R⁴)₃, worin R⁴ die Bedeutung (R³)₃ Si hat.

Die Zahl der Aminogruppen in R¹ und R² ist nicht beschränkt, beträgt bevorzugt jedoch 0 bis 6 und stärker bevorzugt 0 bis 4. Die Zahl der Kohlenstoffatome in R¹, R² und R³ ist ebenfalls nicht beschränkt, beträgt bevorzugt jedoch 1 bis 6 für aliphatische und 5 bis 20 für aromatische und aliphatisch-aromatische Reste.

Stärker bevorzugt werden die Amine ausgewählt unter Ammoniak, Ethylendiamin, Diethylamin, Dimethylamin, Methylamin, Anilin, Ethylamin, Hexamethyldisilazan, Heptamethyldisilazan und Tris-(trimethylsilyl)amin. Besonders bevorzugt sind solche Amine unter den vorgenannten, die kurzkettige Alkylreste, insbesondere Methyl- und Ethylreste, tragen. Dimethylamin ist besonders günstig. Sekundäre Amine haben den Vorteil, dass die damit erhaltenen Polymere -NR₂-Gruppen tragen, also frei von NH-Funktionen sind. Der Vorteil liegt darin, dass bei der nachfolgenden Vernetzung solcher derart substituierter Polysilan/Oligosilane eine Polykondensation von Aminogruppen unmöglich ist, die zu schlechter oder gar nicht mehr löslichen Produkten führen könnte, was erfindungsgemäß natürlich nicht gewünscht ist. Dennoch sind Silylamine wie Disilazane anstelle von reinen Aminen ebenfalls geeignet, da der Eintrag von Siliciumatomen bei der Substitution keine nachteiligen Effekte für die späteren Formkörper bzw. Fasern nach sich zieht. Die Substitution mit Silylaminen hat außerdem den Vorteil, dass das Chlor nicht in Form eines Ammoniumsalzes, sondern in Form von Trimethylchlorsilan anfällt, das destillativ abgetrennt und in die Prozesskette zurückgeführt werden kann.

Die Chlorreduzierung/Substitution findet in der Regel folgendermaßen statt:
Das Ausgangsmaterial, d.h. das Kohlenwasserstoffgruppen tragende/enthaltende, durch die oben beschriebene Disproportionierung erhaltene Roh-Polysilan/Oligosilan wird in einem geeigneten inerten und aprotischen Lösungsmittel gelöst. Als Lösemittel kommen vor allem aprotische, unpolare Lösemittel wie aliphatische Kohlenwasserstoffe aus der Gruppe n-Pentan, n-Hexan, Cyclohexan, n-Heptan, n-Octan, halogenierte Kohlenwasserstoffe aus der Gruppe Methylenchlorid, Chloroform, Tetrachlorkohlenstoff, 1,1,1-Trichlorethan, Chlorbenzol oder aromatische Kohlenwasserstoffe aus der Gruppe Benzol, Toluol, o-Xylol, sym-Mesitylen in Frage, des Weiteren etherhaltige Lösungsmittel aus der Gruppe Diethylether, Diisopropylether, Tetrahydrofuran, 1,4-Dioxan oder ein höherer oder nicht-symmetrischer Ether. Es können auch Mischungen von zweien oder mehr der vorgenannten Lösemittel eingesetzt werden. Das Lösemittel ist bevorzugt ein halogenfreier Kohlenwasserstoff, besonders bevorzugt ein aromatischer Kohlenwasserstoff aus der Gruppe Benzol, Toluol, o-Xylol.

Das Substitutionsmittel (Amin) wird in einem molaren Überschuss zugegeben, der vorzugsweise mindestens 2:1 beträgt, bezogen auf die gebundenen Chloratome im Ausgangsmaterial. Das Substitutionsmittel wird unverdünnt oder in einem inerten und aprotischen Lösungsmittel wie oben angegeben gelöst zugegeben. Das Zugeben kann z.B. durch Zutropfen erfolgen; dabei sollte vorzugsweise eine Temperatur zwischen Raumtemperatur und dem Siedepunkt des Amins bzw. dessen Lösung eingehalten werden. Beim oder nach dem Zutropfen bildet sich ein Salz, das im Lösungsmittel unlöslich ist, oder - im Falle der Substitution mit Silylaminen - Trimethylchlorsilan. Die Suspension wird einige Zeit, häufig mehrere Stunden, stehengelassen oder bis zur Siedehitze des Lösungsmittels unter Rückfluss gekocht. Anschließend wird sie ggf. auf Raumtemperatur abgekühlt, und sofern sich Salz gebildet hat, wird dieses abfiltriert. Darauffolgend wird das Lösungsmittel sowie ggf. gebildetes Trimethylchlorsilan vollständig entfernt, beispielsweise im Vakuum.

Bei Anwendung eines Amins, das während der Zugabe zum Roh-Polysilan/Oligosilan gasförmig vorliegt, z.B. bei Anwendung von Ammoniak, kann dieses als Gas eingeleitet oder aber entweder bei Temperaturen unterhalb seines Siedepunktes in ein Reaktionsgefäß einkondensiert oder unter Überdruck als Flüssigkeit in dieses eingefüllt werden, im Falle verflüssigter Amine optional unter Verdünnung mit einem geeigneten Lösungsmittel wie voranstehend angegeben. Anschließend wird das Ausgangsmaterial, gelöst wiederum möglichst in demselben Lösungsmittel, zudosiert. Nach vollständiger Zugabe wird der Ansatz für einen ähnlichen Zeitraum wie den oben beschriebenen stehengelassen oder am Rückfluss gekocht und anschließend wie voranstehend beschrieben aufgearbeitet.

Der Chlorgehalt des so behandelten Ausgangsmaterials lässt sich durch den erfindungsgemäßen Verfahrensschritt in der Regel auf bis unter 0,2 Masse-% reduzieren.

Das Roh-Polysilan/Oligosilan wird sodann wie in der WO 2005/108470 beschrieben einer weitergehenden thermischen Behandlung unterzogen, bei der es einerseits durch Vergrößerung des mittleren Molekulargewichts schwer- bzw. unschmelzbar gemacht und andererseits durch die hierbei stattfindenden Umlagerungsreaktionen in ein Polysilan-Polycarbosilan-Copolymer überführt wird. Ein weiterer erfindungsgemäß beabsichtigter Effekt dieser thermischen Nachbehandlung ist eine nochmalige Verringerung des Gehaltes an chemisch gebundenem Chlor, falls die vorangegangene Substitution nicht quantitativ erfolgt sein sollte.

Die thermische Nachbehandlung findet in der Regel unter Atmosphärendruck statt, wobei es sehr empfehlenswert ist, unter Feuchtigkeits- und Sauerstoffausschluss zu arbeiten. Deshalb wird das Material günstigerweise unter Inertgas, in besonders vorteilhafter Weise unter Reinstickstoffatmosphäre behandelt, wobei man die Temperaturen auf zwischen 250° (oder nahe 300°) und 500 °C, bevorzugt zwischen 380 und 450 °C und ganz besonders bevorzugt zwischen 390 und 420 °C ansteigen lässt. Das Aufheizen erfolgt bevorzugt kontinuierlich, beispielsweise mit einer Geschwindigkeit von 1-5 K/min., vorzugsweise von 2-4 K/min. Während der Reaktion als Spaltprodukte anfallende niedermolekulare Methylsilylamine und z.T. Methylchlorsilylamine werden kontinuierlich abdestilliert. Der Endpunkt der thermischen Nachbehandlung macht sich durch einen steilen Anstieg des Drehmoments am Rührwerk bemerkbar. Während der nachfolgenden Abkühlphase können letzte Reste flüchtiger Bestandteile im Vakuum in einem Temperaturbereich um 100 °C entfernt werden. Das für die Herstellung der erfindungsgemäßen Polysilan-Polycarbosilan-Lösung erforderliche unschmelzbare, aber lösliche Copolymer lässt sich damit in einem einzigen Schritt aus dem dechlorierten Roh-Polysilan/Oligosilan herstellen, wobei in der Regel keine weiteren Trennschritte (Extraktionen, Filtrationen) mehr erforderlich sind.

Will man aus dem erfindungsgemäß hergestellten Polysilan-Polycarbosilan-Copolymer Fasern spinnen oder andere Formkörper bilden, wird das Copolymer wie aus WO 2005/108470 bekannt in einem indifferenten organischen Lösemittel gelöst. Als Lösemittel kommen vor allem unpolare Lösemittel wie aliphatische Kohlenwasserstoffe (z.B. n-Pentan, n-Hexan, Cyclohexan, n-Heptan, n-Octan), aromatische Kohlenwasserstoffe (z.B. Benzol, Toluol, o-Xylol, sym-Mesitylen), halogenierte Kohlenwasserstoffe (z.B. Methylenchlorid, Chloroform, Tetrachlorkohlenstoff, 1,1,1-Trichlorethan, Chlorbenzol) oder Ether (z.B. Diethylether, Diisopropylether, Tetrahydrofuran, 1,4-Dioxan oder ein höherer oder nicht-symmetrischer Ether) in Frage. Das Lösemittel ist bevorzugt ein halogenierter oder halogenfreier Kohlenwasserstoff, besonders bevorzugt ein halogenfreier aromatischer Kohlenwasserstoff aus der Gruppe Benzol, Toluol, o-Xylol.

Der Mengenanteil des Polysilan-Polycarbosilan-Copolymers in der Polymerlösung kann je nach dem Verwendungszweck der Lösung eingestellt werden. Dient die Lösung der Herstellung von Fasern nach dem Trockenspinnverfahren, sind Polymeranteile von 50-90 Masse-%, bevorzugt 60-70 Masse-% vorteilhaft. Dient die Lösung der Herstellung keramischer Matrices nach dem Flüssigphasen-Infiltrationsverfahren, so kann der Polymeranteil aufgrund der erforderlichen niedrigen Viskosität deutlich niedriger, z.B. 20 Masse-%, gewählt werden.

Zur Anwendung der Polymerlösung für die Faserherstellung nach dem Trockenspinnverfahren ist es häufig notwendig, zumindest aber meist hilfreich, zur Einstellung der erforderlichen viskoelastischen Eigenschaften ein Spinnhilfsmittel zuzusetzen.

Als Spinnhilfsmittel kommen organische, in dem jeweiligen Lösemittel lösliche Polymere in Frage, beispielsweise Polyethylen, Polypropylen, Polystyrol, Polyvinylchlorid, Polyacrylnitril oder Poly(4-vinylpyridin). Das bevorzugte Spinnhilfsmittel ist Polystyrol; der Mengenanteil liegt bevorzugt zwischen 1 und 5 Masse-%, besonders bevorzugt bei 2 Masse-%.

Im Folgenden wird die Herstellung von SiC-Keramikfasern aus den erfindungsgemäßen Polymerlösungen beschrieben, ohne dass darin eine Einschränkung der Anwendungsmöglichkeiten dieser Lösung zu sehen ist.

Die Herstellung von Polymerfasern erfolgt nach dem Trockenspinnverfahren; dieses ist Stand der Technik (F. Fourne, "Synthetische Fasern", Carl Hauser Verlag 1995, S. 183; V.B. Gupta, V.K. Kothari (Hrsg.), "Manufactured Fiber Technology", Chapman & Hall 1997, S. 126). Bevorzugte Parameter für den Spinnprozess sind die Verwendung eines Düsenpakets mit Düsen vom Durchmesser 75 bis 300 µm und einer Kapillarlänge von 0,2 bis 0,5 mm, eine Schachttemperatur von 20 bis 50 °C bei einer Länge von 2 m und eine Abzugsgeschwindigkeit von 100 bis 300 m/min.

Die erfindungsgemäßen Polymerfasern können ohne vorhergehende formstabilisierende Behandlung pyrolysiert werden. Die bevorzugten Parameter für die Pyrolyse sind eine Aufheizgeschwindigkeit zwischen 5 und 50 K/min und eine Endtemperatur von 900 bis 1200 °C. Die Pyrolyse kann unter inerter (N₂, Argon) oder reduzierender (Argon/H₂, N₂/CO etc.) Atmosphäre erfolgen. Die bevorzugte Atmosphäre für die Pyrolyse ist Stickstoff oder Formiergas (Argon mit 10 Vol.-% H₂). Als Ofen ist beispielsweise ein elektrischer Ofen geeignet.

Nach der Pyrolyse können die Keramikfasern einer weiteren thermischen Behandlung unterzogen werden, die zu ihrer Verdichtung und teilweisen Kristallisation führt und ihre mechanischen Festigkeiten verbessert.

Mit dem erfindungsgemäßen Verfahren lassen sich sauerstoffarme Keramikfasern mit einer Zusammensetzung nahe SiC herstellen, deren Faserdurchmesser zwischen 5 und 50 µm, deren Zugfestigkeit oberhalb 500 MPa und deren Elastizitätsmodul oberhalb von 120 GPa liegen. Solche Fasern sind als Verstärkungselemente in Ceramic Matrix Composits (CMC) geeignet. Eine Lösung des Polysilan-Polycarbosilan-Copolymers in einem indifferenten Lösungsmittel kann statt zur Faserherstellung auch zum Aufbau keramischer Matrices durch Flüssigphasen-Infiltration genutzt werden.

Die folgenden Beispiele dienen der näheren Beschreibung und Illustration der Erfindung, ohne dass in ihnen eine Einschränkung des Anwendungsbereiches zu sehen ist.

### Beispiel 1

Herstellung eines Roh-Polysilans/Oligosilans

600 g eines Methylchlordisilan-Gemischs ("Disilan-Fraktion" aus dem Müller-Rochow-Prozeß, bestehend aus je 45 mol-% Cl₂MeSiSiMeCl₂ und Cl₂MeSiSiMe₂Cl sowie 10 mol-% ClMe₂SiSiMe₂Cl; Kp. 150-155 °C) werden mit 14 g N-Methylimidazol und 69 g Phenyltrichlorsilan versetzt und mit 0,5 K/min auf 180 °C erhitzt. Hierbei werden ca. 450 ml eines Destillats erhalten, das aus MeSiCl₃, Me₂SiCl₂ und Me₂ClSiSiMe₂Cl besteht, sowie 153 g eines dunkelbraunen, bei Raumtemperatur festen, hydrolyseempfindlichen Roh-Polysilans/Oligosilans mit einem Chlorgehalt von ca. 25 Masse-%. Dieses wird in Toluol oder Xylol zu einer 60 Masse-% Roh-Polysilan/Oligosilan enthaltenden Lösung gelöst.

### Beispiel 2

Modifizierung eines Roh-Polysilans/Oligosilans mit Diethylamin

In einem 2000 ml-Dreihalskolben mit Rückflußkühler, KPG-Rüher und Tropftrichter werden 335 ml über CaH₂ getrocknetes Diethylamin vorgelegt und mit dem gleichen Volumen abs. Toluol oder Xylol verdünnt. Die Lösung wird zum Sieden erhitzt, und bei Siedehitze werden 380 g einer 60 %igen Lösung eines durch Disproportionierung der "Disilan-Fraktion" erhalten Roh-Polysilans/Oligosilans in Toluol zugetropft. Nach zweistündigem Refluxieren und Abkühlen wird der Ansatz durch eine Drucknutsche vom ausgeschiedenen Diethylammoniumchlorid abfiltriert und das Lösemittel aus dem Filtrat abdestilliert. Das Produkt enthält noch ca. 5 Masse-% Chlor (ursprünglicher Cl-Gehalt: 25 Masse-%).

### Beispiel 3

Modifizierung eines Roh-Polysilans/Oligosilans mit flüssigem Methylamin

In einem 1 I-Doppelwanddreihalskolben mit Rückflußkühler, Tropftrichter und KPG-Rührer werden 100 ml Toluol oder Xylol vorgelegt; der Doppelwandkolben wird mittels eines Kryostaten auf-30 °C gekühlt. Es werden ca. 300 ml Methylamin einkondensiert und anschließend über den Tropftrichter 275 g einer 60 %igen Lösung eines durch Disproportionierung der "Disilan-Fraktion" erhaltenen Roh-Polysilans/Oligosilans in Toluol oder Xylol zugetropft. Das nach Auftauen ausgeschiedene Methylammoniumchlorid wird über eine Drucknutsche abfiltriert und das Filtrat im Vakuum bei 65 °C vom Lösemittel befreit. Das erhaltene modifizierte Polysilan/Oligosilan enthält weniger als 0,2 Masse-% Chlor.

### Beispiel 4

Modifizierung eines Roh-Polysilans/Oligosilans mit flüssigem Dimethylamin

Die Modifizierung verläuft analog der in Beispiel 2 beschriebenen, jedoch unter Verwendung von Dimethylamin anstelle von Methylamin. Das modifizierte Polysilan/Oligosilan enthält 0,2 Masse-% Chlor.

### Beispiel 5

Modifizierung eines Oligosilans mit gasförmigem Dimethylamin

In einem doppelwandigen 2 I-Reaktionsgefäß mit Bodenventil, Rückflußkühler, KPG-Rührer, Innenthermometer und Gaseinleitungsrohr werden 1500 ml einer 60 %igen Lösung eines durch Disproportionierung der "Disilan-Fraktion" erhaltenen Roh-Polysilans/Oligosilans in Toluol oder Xylol vorgelegt und auf 0 °C gekühlt. Anschließend werden unter kräftigem Rühren innerhalb von 3 h ca. 700 g gasförmiges Dimethylamin unterhalb des Flüssigkeitsspiegels eingeleitet. Die Temperatur des Gemischs steigt hierbei auf 30-35 °C und fällt gegen Ende der Reaktion wieder. Das Produkt wird über das Bodenventil unter Überschleierung mit Argon abgelassen und das ausgeschiedene Dimethylammoniumchlorid über eine Drucknutsche abfiltriert. Aus dem Filtrat wird das Lösemittel abdestilliert. Das modifizierte Polysilan/Oligosilan enthält noch
ca. 1,5-2 Masse-% Chlor.

### Beispiel 6

Thermische Vernetzung eines mit Dimethylamin modifizierten Polysilans/Oligosilans

600 g des modifizierten Polysilan/Oligosilan aus Beispiel 4 wird in einer Destillationsapparatur langsam auf eine Endtemperatur von ca. 400 °C erhitzt. Während des Erhitzens werden ca. 200 ml eines gelblichen Destillats erhalten, das im wesentlichen aus MeSi(NMe₂)₃ und MeSi(NMe₂)₂Cl besteht; der Endpunkt der Vernetzung ist an der Verfestigung der Masse zu erkennen. Nach Abkühlen wird das erhaltene Copolymer, dessen Chlorgehalt jetzt nur noch ca. 0,5 Masse-% beträgt, in Toluol gelöst und in Anlehnung an die Patentanmeldung DE 10 2004 04 531 A1 eine Spinnmasse mit Polystyrol als Spinnhilfsmittel hergestellt.

### Beispiel 7

Verspinnen einer Spinnmasse nach Beispiel 5

Die nach Beispiel 5 hergestellt Spinnmasse wird in einer Extrusionsapparatur mit
100 µm-Düsen zu Fasern versponnen. Die aus der Düsenplatte austretenden Filamente trocknen im Spinnschacht im N₂-Gegenstrom und werden mit 30 m/min abgezogen (Verzug = 3,7). Anschließend erfolgt die Pyrolyse des Faserbündels bei Temperaturen bis 1200 °C in Stickstoffatmosphäre. Die Keramikfasern haben Durchmesser von 25-30 µm, Zugfestigkeiten von bis zu 1160 MPa und einen E-Modul von bis zu 162 GPa. Der Chlor- und Sauerstoffgehalt der Keramikfasern beträgt jeweils weniger als 1 Masse-%.

## Patentansprüche

1. Verfahren zur Herstellung von unschmelzbaren, in indifferenten Lösemitteln löslichen Polysilan-Polycarbosilan-Copolymeren, umfassend die Schritte
- Bereitstellen des Produkts einer Disproportionierung eines oder eines Gemischs mehrerer Methylchlordisilane der Zusammensetzung Si₂MeₙCl₆₋ₙ , worin n = 1-4 ist, wobei die Disproportionierung mit einer Lewis-Base als Katalysator erfolgte, wobei dieses Produkt ein chlorhaltiges, Kohlenwasserstoffgruppen enthaltende Roh-Polysilan/Oligosilan ist, und
- thermisches Nachvernetzen des Roh-Polysilans/Oligosilans zu einem Polysilan-Polycarbosilan-Copolymer,
**dadurch gekennzeichnet, dass** der Chlorgehalt des Polysilan-Polycarbosilan-Copolymer dadurch gesenkt wird, dass das Roh-Polysilan/Oligosilan mit einem Substitutionsmittel umgesetzt wird, durch welches darin gebundenes Chlor durch einen chlorfreien, stickstoffhaltigen Substituenten ersetzt wird.

2. Verfahren nach Anspruch 1, worin das Substitutionsmittel ausgewählt ist unter Aminen der Formel HNR¹R², worin R¹ und R² unabhängig voneinander Wasserstoff, ggf. mit weiteren Aminogruppen substituiertes Alkyl, Alkenyl, Aryl, Arylalkyl, Alkylaryl, Arylalkenyl, Alkenylaryl oder (R³)₃Si-[NR³-Si(R³)₂]ₘ mit m = 0 bis 6 sind, oder worin R¹ und R² zusammen einen Alkylenrest mit 4 oder 5 Kohlenstoffatomen oder -Si(R³)₂-[NR³-Si(R³)₂]ₙ- mit n gleich 1-6 darstellen, wobei in allen Fällen jeder Rest R³ unabhängig von anderen Resten R³ Wasserstoff, Alkyl oder Aryl sein kann, sowie cyclischen Aminen, ausgewählt unter Pyrrol, Indol, Carbazol, Pyrazol, Piperidin und Imidazol, und Mischungen der genannten Amine.

3. Verfahren nach Anspruch 2, **dadurch gekennzeichnet, dass** das Roh-Polysilan/Oligosilan mit einem Substitutionsmittel umgesetzt wird, das ausgewählt ist unter Ammoniak, primären Aminen, sekundären Aminen und Mischungen davon.

4. Verfahren nach Anspruch 3, worin entweder R¹ oder R² oder R¹ und R² Alkyl, vorzugsweise Methyl sind.

5. Verfahren nach einem der voranstehenden Ansprüche, worin das Roh-Polysilan/Oligosilan nach der Umsetzung mit dem genannten Substitutionsmittel einen Chlorgehalt von unter 3 Masse-% und das Polysilan-Polycarbosilan einen Chlorgehalt von unter 1 Masse-% aufweist.

6. Verfahren zum Herstellen von Grünfasern, umfassend die Schritte:
- Bereitstellen des Produkts einer Disproportionierung eines oder eines Gemischs mehrerer Methylchlordisilane der Zusammensetzung Si₂MeₙCl₆₋ₙ , worin n = 1-4 ist, wobei die Disproportionierung mit einer Lewis-Base als Katalysator erfolgte, wobei dieses Produkt ein chlorhaltiges, Kohlenwasserstoffgruppen enthaltende Roh-Polysilan/Oligosilan ist,
- thermisches Nachvernetzen des Roh-Polysilans/Oligosilans zu einem Polysilan-Polycarbosilan-Copolymer,
- Lösen des Polysilan-Polycarbosilan-Copolymers in einem indifferenten Lösemittel und
- Verspinnen des gelösten Polysilan-Polycarbonsilan-Copolymers zu Grünfasern nach dem Trockenspinnverfahren, **dadurch gekennzeichnet, dass** der Chlorgehalt des Polysilan-Polycarbosilan-Copolymer dadurch gesenkt wird, dass das Roh-Polysilan/Oligosilan mit einem Substitutionsmittel umgesetzt wird, durch welches darin gebundenes Chlor durch einen chlorfreien, stickstoffhaltigen Substituenten ersetzt wird.

7. Verfahren nach Anspruch 6, **dadurch gekennzeichnet, dass** die Lösung des Polysilan-Polycarbosilan-Copolymers ein Spinnhilfsmittel enthält, vorzugsweise ausgewählt unter organischen Polymeren, die aus der folgenden Gruppe bestehen: Polyethylen, Polypropylen, Polystyrol, Polyvinylchlorid, Polyacrylnitril, Poly(4-vinylpyridin).

8. Verfahren nach einem Ansprüche 6 oder 7, **dadurch gekennzeichnet, dass** der Masseanteil des Polysilan-Polycarbosilan-Copolymers in der Lösung zwischen 30 und 95 % und der Masseanteil des Spinnhilfsmittels zwischen 0 und 10 % liegt.

9. Verfahren zur Herstellung von sauerstoffarmen Keramikfasern mit einer Zusammensetzung nahe SiC, umfassend die Schritte:
(1) Herstellen von Grünfasern nach einem der Ansprüche 6 bis 8,
(2) Pyrolysieren der getrockneten Grünfasern aus Schritt (1) unter Inertgasatmosphäre oder reduzierender Atmosphäre.

10. Verfahren nach Anspruch 9, **dadurch gekennzeichnet, dass** der Trockenspinnprozess bei einer Temperatur von 20 bis 100 °C mit einer Abzugsgeschwindigkeit von 20 bis 500 m/min durchgeführt wird.

11. Verfahren nach einem der Ansprüche 9 oder 10, **dadurch gekennzeichnet, dass** die erhaltenen Keramikfasern bei Temperaturen von 1200-2000 °C unter inerter oder reduzierender Atmosphäre gesintert werden.

12. Sauerstoffarme Keramikfasern mit einer Zusammensetzung nahe SiC, deren Faserdurchmesser zwischen 5 und 50 µm, deren Zugfestigkeit oberhalb 500 MPa und deren Elastizitätsmodul oberhalb 120 GPa liegt, **dadurch gekennzeichnet, dass** sie nach einem Verfahren der Ansprüche 9 bis 11 hergestellt wurden.

13. Sauerstoffarme Keramikfasern nach Anspruch 12, **dadurch gekennzeichnet, dass** der Si-Gehalt zwischen 30 und 60 At.-%, der C-Gehalt zwischen 40 und 70 At.-%, der Sauerstoffgehalt < 1 Masse-%, der Chlorgehalt unter 1 Masse-%, vorzugsweise unter 0,2 Masse-% und ganz besonders bevorzugt unter 0,1 Masse-% und/oder der Bor-Gehalt zwischen 0 und 10 At.-% beträgt.

14. Verfahren zum Aufbau keramischer Matrices, umfassend die Schritte:
- Bereitstellen des Produkts einer Disproportionierung eines oder eines Gemischs mehrerer Methylchlordisilane der Zusammensetzung Si₂MeₙCl₆₋ₙ , worin n = 1-4 ist, wobei die Disproportionierung mit einer Lewis-Base als Katalysator erfolgte, wobei dieses Produkt ein chlorhaltiges, Kohlenwasserstoffgruppen enthaltende Roh-Polysilan/Oligosilan ist,
- thermisches Nachvernetzen des Roh-Polysilans/Oligosilans zu einem Polysilan-Polycarbosilan-Copolymer,
- Lösen des Polysilan-Polycarbosilan-Copolymers in einem indifferenten Lösemittel und
- Verwenden des gelösten Polysilan-Polycarbosilan-Copolymers zum Aufbau einer keramischen Matrix durch Flüssigphasen-Infiltration,
**dadurch gekennzeichnet, dass** der Chlorgehalt des Polysilan-Polycarbosilan-Copolymer dadurch gesenkt wird, dass das Roh-Polysilans/Oligosilan oder das Polysilan-Polycarbosilan-Copolymer mit einem Substitutionsmittel umgesetzt wird, durch welches Chlor durch einen chlorfreien Substituenten ersetzt wird.

15. Verwendung der Keramikfasern gemäß einem der Ansprüche 12 oder 13 als Verstärkungselemente in Ceramic Matrix Composites (CMC).

## Claims

1. A process for producing unmeltable polysilane-polycarbosilane copolymers which are soluble in indifferent solvents, comprising the steps:
- providing the product of a disproportionation of a methylchlorodisilane or a mixture of several methylchlorodisilanes having the composition Si₂MeₙCl₆₋ₙ, wherein
n = 1-4, wherein the disproportionation has been carried out with a Lewis base as a catalyst, wherein this product is a chlorine-containing, crude polysilane/oligosilane containing hydrocarbon groups, and
- thermally post-crosslinking the crude polysilane/oligosilane to a polysilane-polycarbosilane copolymer,
**characterized in that** the chlorine content of the polysilane-polycarbosilane copolymer is lowered by reacting the crude polysilane/oligosilane with a substitution agent, by which chlorine bound therein is replaced with a chlorine-free, nitrogen-containing substituent.

2. Process in accordance with claim 1, wherein the substitution agent is selected from among amines of formula HNR¹R², wherein R¹ and R², independently of one another, are hydrogen, alkyl, alkenyl, aryl, arylalkyl, alkylaryl, arylalkenyl, alkenylaryl possibly substituted with other amino groups, or (R³)₃Si-[NR³-Si(R³)₂]ₘ with m = 0 to 6, or wherein R¹ and R² together represent an alkylene residue with 4 or 5 carbon atoms or -Si(R³)₂-[NR³-Si(R³)₂]ₙ- with n = 1 to 6, wherein in all cases each radical R³, independently of other R³ radicals, may be hydrogen, alkyl or aryl, as well as cyclic amines, selected from among pyrrole, indole, carbazole, pyrazole, piperidine and imidazole, and mixtures of said amines.

3. Process in accordance with claim 2, **characterized in that** the crude polysilane/oligosilane is reacted with a substitution agent which is selected from among ammonia, primary amines, secondary amines and mixtures thereof.

4. Process in accordance with claim 3, wherein either R¹ or R², or R¹ and R² are alkyl, and preferably methyl.

5. Process in accordance with one of the preceding claims, wherein after the reaction with the said substitution agent, said crude polysilane/oligosilane has a chlorine content of less than 3 wt.% and the polysilane-polycarbosilane has a chlorine content of less than 1 wt.%.

6. A process for producing green fibers, comprising the steps:
- providing the product of a disproportionation of a methylchlorodisilane or a mixture of several methylchlorodisilanes of the composition Si₂MeₙCl₆₋ₙ, wherein n = 1-4, wherein the disproportionation has been carried out with a Lewis base as catalyst, wherein this product is a chlorine-containing, crude polysilane/oligosilane containing hydrocarbon groups,
- thermally post-crosslinking the crude polysilane/oligosilane to a polysilane-polycarbosilane copolymer,
- dissolving the polysilane-polycarbosilane copolymer in an indifferent solvent, and
- spinning the dissolved polysilane-polycarbosilane copolymer to green fibers according to the dry spinning process, **characterized in that** the chlorine content of the polysilane-polycarbosilane copolymer is lowered by reacting the crude polysilane/oligosilane with a substitution agent, by which the chlorine bound therein is replaced with a chlorine-free, nitrogen-containing substituent.

7. Process in accordance with claim 6, **characterized in that** the solution of the polysilane-polycarbosilane copolymer contains a spinning aid, which is preferably selected from among organic polymers, which consist of the following group: polyethylene, polypropylene, polystyrene, polyvinyl chloride, polyacrylonitrile, poly(4-vinylpyridine).

8. Process in accordance with claim 6 or 7, **characterized in that** the weight percentage of the polysilane-polycarbosilane copolymer in the solution is between 30% and 95% and the weight percentage of the spinning aid is between 0% and 10%.

9. A process for producing low-oxygen ceramic fibers with a composition close to SiC, comprising the steps:
(1) producing green fibers in accordance with one of the claims 6 to 8,
(2) pyrolyzing the dried green fibers of step (1) under an inert gas atmosphere or reducing atmosphere.

10. Process in accordance with claim 9, **characterized in that** the dry spinning process is carried out at a temperature of 20°C to 100°C with a discharge rate of 20 m/min to 500 m/min.

11. Process in accordance with one of the claims 9 or 10, **characterized in that** the obtained ceramic fibers are sintered at temperatures of 1,200-2,000°C under an inert or reducing atmosphere.

12. Low-oxygen ceramic fibers with a composition close to SiC, having a fiber diameter of between 5 µm and 50 µm, a tensile strength of above 500 MPa and a modulus of elasticity of above 120 GPa, **characterized in that** they were produced in accordance with a process of the claims 9 to 11.

13. Low-oxygen ceramic fibers in accordance with claim 12, **characterized in that** the Si content is between 30 at.% and 60 at.%, the C content is between 40 at.% and 70 at.%, the oxygen content is < 1 wt.%, the chlorine content is less than 1 wt.%, preferably less than 0.2 wt.% and especially preferably less than 0.1 wt.% and/or the boron content is between 0 at.% and 10 at.%.

14. A process for constructing ceramic matrices, comprising the steps:
- providing the product of a disproportionation of a methylchlorodisilane or a mixture of several methylchlorodisilanes of the composition Si₂MeₙCl₆₋ₙ, wherein n = 1-4, wherein the disproportionation has been carried out with a Lewis base as a catalyst, wherein this product is a chlorine-containing, crude polysilane/oligosilane containing hydrocarbon groups,
- thermally post-crosslinking the crude polysilane/oligosilane to a polysilane-polycarbosilane copolymer,
- dissolving the polysilane-polycarbosilane copolymer in an indifferent solvent, and
- using the dissolved polysilane-polycarbosilane copolymer for constructing a ceramic matrix by means of liquid-phase infiltration,
**characterized in that** the chlorine content of the polysilane-polycarbosilane copolymer is lowered by reacting the crude polysilane/oligosilane or the polysilane-polycarbosilane copolymer with a substitution agent, by which chlorine is replaced with a chlorine-free substituent.

15. Use of ceramic fibers in accordance with one of the claims 12 or 13 as reinforcing elements in Ceramic Matrix Composites (CMC).

## Revendications

1. Procédé de production de copolymères polysilane-polycarbosilane infusibles, solubles dans des solvants indifférents, le procédé comprenant les étapes suivantes:
- préparer le produit d'une dismutation d'un méthylchlordisilane ou d'un mélange de plusieurs méthylchlordisilanes, ayant la composition Si₂MeₙCl₆₋ₙ, où n = 1-4, dans lequel la dismutation a été effectuée avec une base de Lewis comme catalyseur, ce produit étant un polysilane/oligosilane brut, chloré, renfermant des groupes hydrocarbure, et
- opérer une réticulation ultérieure thermique du polysilane/oligosilane brut en un copolymère polysilanepolycarbosilane,
**caractérisé en ce que** l'on abaisse la teneur en chlore du copolymère polysilane-polycarbosilane en faisant réagir le polysilane/oligosilane brut avec un agent de substitution, au moyen duquel le chlore qui est lié est remplacé par un substituant exempt de chlore et contenant de l'azote.

2. Procédé selon la revendication 1, dans lequel le substituant est choisi parmi les amines de formule HNR¹R², dans laquelle R¹ et R² sont indépendamment l'un de l'autre un hydrogène, un alkyle, alcényle, aryle, arylalkyle, alkylaryle, arylalcényle, alcénylaryle éventuellement substitué avec d'autres groupes amino ou (R³)₃Si-[NR³-Si(R³)₂]ₘ avec m = 0 à 6, ou dans laquelle R¹ et R² représentent ensemble un radical alkylène avec 4 ou 5 atomes de carbone ou -Si (R³) ₂- [NR³-Si(R³)₂]ₙ avec n = 1-6, dans lequel dans tous les cas chaque radical R³ peut être indépendamment d'autres radicaux R³ un hydrogène, un alkyle ou aryle, ainsi que des amines cycliques, choisies parmi pyrrole, indole, carbazole, pyrazole, pipéridine et imidazole, et des mélanges des amines précitées.

3. Procédé selon la revendication 2, **caractérisé en ce que** l'on fait réagir le polysilane/oligosilane brut avec un agent de substitution, qui est choisi parmi l'ammoniac, des amines primaires, des amines secondaires et des mélanges de ceux-ci.

4. Procédé selon la revendication 3, dans lequel soit R¹ soit R² soit R¹ et R² sont un alkyle, de préférence un méthyle.

5. Procédé selon l'une quelconque des revendications précédentes, dans lequel le polysilane/oligosilane brut présente, après la réaction avec ledit agent de substitution, une teneur en chlore inférieure à 3 % en masse et le polysilane-polycarbosilane présente une teneur en chlore inférieure à 1 % en masse.

6. Procédé de production de fibres crues, comprenant les étapes suivantes:
- préparer le produit d'une dismutation d'un méthylchlordisilane ou d'un mélange de plusieurs méthylchlordisilanes, ayant la composition Si₂MeₙCl₆₋ₙ, où n = 1-4, dans lequel la dismutation a été effectuée avec une base de Lewis comme catalyseur, ce produit étant un polysilane/oligosilane brut, chloré, renfermant des groupes hydrocarbure, et
- opérer une réticulation ultérieure thermique du polysilane/oligosilane brut en un copolymère polysilanepolycarbosilane,
- dissoudre le copolymère polysilane-polycarbosilane dans un solvant indifférent, et
- filer le copolymère polysilane-polycarbosilane dissous en fibres crues selon le procédé de filage à sec,
**caractérisé en ce que** l'on abaisse la teneur en chlore du copolymère polysilane-polycarbosilane en faisant réagir le polysilane/oligosilane brut avec un agent de substitution, au moyen duquel le chlore qui est lié est remplacé par un substituant exempt de chlore et contenant de l'azote.

7. Procédé selon la revendication 6, **caractérisé en ce que** la solution du copolymère polysilane-polycarbosilane contient un adjuvant de filage, de préférence choisi parmi des polymères organiques, qui se composent du groupe suivant:
polyéthylène, polypropylène, polystyrène, chlorure de polyvinyle, polyacrylonitrile, poly(4-vinylpyridine).

8. Procédé selon une des revendications 6 ou 7, **caractérisé en ce que** la fraction massique du copolymère polysilane-polycarbosilane dans la solution se situe entre 30 et 95 % et la fraction massique de l'adjuvant de filage se situe entre 0 et 10 %.

9. Procédé de production de fibres céramiques à faible teneur en oxygène ayant une composition proche de SiC, comprenant les étapes suivantes:
(1) produire des fibres crues selon une des revendications 6 à 8,
(2) pyrolyser les fibres crues séchées de l'étape (1) sous une atmosphère de gaz inerte ou sous une atmosphère réductrice.

10. Procédé selon la revendication 9, **caractérisé en ce que** l'on exécute le processus de filage à sec à une température de 20 à 100°C avec une vitesse d'extraction de 20 à 500 m/min.

11. Procédé selon une des revendications 9 ou 10, **caractérisé en ce que** l'on fritte les fibres céramiques obtenues à des températures de 1200-2000°C sous une atmosphère de gaz inerte ou sous une atmosphère réductrice.

12. Fibres céramiques à faible teneur en oxygène ayant une composition proche de SiC, dont le diamètre de fibre se situe entre 5 et 50 µm, dont la résistance à la traction se situe au-dessus de 500 MPa et dont le module d'élasticité se situe au-dessus de 120 GPa, **caractérisées en ce qu'**elles ont été produites par un procédé selon l'une quelconque des revendications 9 à 11.

13. Fibres céramiques à faible teneur en oxygène selon la revendication 12, **caractérisées en ce que** la teneur en Si se situe entre 30 et 60 % atomiques, la teneur en C entre 40 et 70 % atomiques, la teneur en oxygène < 1 % en masse, la teneur en chlore en dessous de 1% en masse, de préférence en dessous de 0,2 % en masse et de préférence encore en dessous de 0,1 % en masse et/ou la teneur en bore entre 0 et 10 % atomiques.

14. Procédé de construction de matrices céramiques, comprenant les étapes suivantes:
- préparer le produit d'une dismutation d'un méthylchlordisilane ou d'un mélange de plusieurs méthylchlordisilanes, ayant la composition Si₂MeₙCl₆₋ₙ, où n = 1-4, dans lequel la dismutation a été effectuée avec une base de Lewis comme catalyseur, ce produit étant un polysilane/oligosilane brut, chloré, renfermant des groupes hydrocarbure, et
- opérer une réticulation ultérieure thermique du polysilane/oligosilane brut en un copolymère polysilanepolycarbosilane,
- dissoudre le copolymère polysilane-polycarbosilane dans un solvant indifférent, et
- utiliser le copolymère polysilane-polycarbosilane dissous pour la construction d'une matrice céramique par infiltration en phase liquide
**caractérisé en ce que** l'on abaisse la teneur en chlore du copolymère polysilane-polycarbosilane en faisant réagir le polysilane/oligosilane brut avec un agent de substitution, au moyen duquel le chlore qui est lié est remplacé par un substituant exempt de chlore et contenant de l'azote.

15. Utilisation des fibres céramiques selon une des revendications 12 ou 13 comme éléments de renforcement dans des composites à matrice céramique (CMC).
